# EUROPÄISCHE PATENTSCHRIFT

(11) **EP 0 355 346 B1**
(45) Veröffentlichungstag und Bekanntmachung des Hinweises auf die Patenterteilung: **02.06.1993**
(21) Anmeldenummer: 89112240.0
(22) Anmeldetag: 05.07.1989
(51) Int. Cl.: B62D 33/06

(54) **Kippvorrichtung für zumindest vorn mit einer Abfederung versehene Fahrerhäuser von Nutzfahrzeugen**
Tilt device for lorry drivers cabs with, at least at the front, a suspension unit
Dispositif de basculement pour cabines de conducteurs de véhicules utilitaires munies, au moins à l'avant, d'une suspension

(30) Priorität: 17.08.1988 DE 3827922
(43) Veröffentlichungstag der Anmeldung: 28.02.1990
(73) Patentinhaber: DAIMLER-BENZ AKTIENGESELLSCHAFT, 70327 Stuttgart (DE)
(72) Erfinder: Sihler, Bernd, D-7901 Lonsee (DE); Seidl, Wolfgang, D-7144 Marbach (DE); Emmann, Siegfried, D-7056 Weinstadt 1 (DE)

(56) Entgegenhaltungen:
- DE-A- 212 054
- DE-A- 2 347 492
- PATENT ABSTRACTS OF JAPAN, Band 9, Nr. 307 (M-435), 4. Dezember 1985; & JP-A-60 143 185 (HINO JIDOSHA KOGYO K.K.) 29-07-1985

## Beschreibung

Die Erfindung bezieht sich auf eine Kippvorrichtung für zumindest vorn mit einer Abfederung versehene Fahrerhäuser von Nutzfahrzeugen der im Oberbegriff des Anspruchs 1 genannten Art.

Kippbare Fahrerhäuser, insbesondere für Lastkraftwagen, sind in vielfacher Form bekannt (DE-A 21 61 953, DE-A-23 47 492). Bei der aus DE-A 23 47 492 bekannten Kippvorrichtung ist das der vorderen, quer verlaufenden Schwenkachse ferne Ende des Schwenkarmes, ausgehend von dieser Schwenkachse,hoch bis hin zum Fahrerhaus geführt und mit diesem verbunden. Der Schwenkhebel ist etwa auf der Längenmitte des Schwenkarmes angelenkt und als doppelarmiger Hebel ausgebildet, wobei ein Ende als Verbindung des Schwenkarmes mit dem Kippzylinder vorgesehen und am Ende des Kippzylinders angelenkt ist und das andere Ende des doppelarmigen Hebels so an einer vorderen Konsole des Fahrerhauses angelenkt ist, daß zu Beginn des Kippvorganges die vom Kippzylinder ausgeübte Kraft eine Schwenkbewegung des Schwenkhebels im Gegenuhrzeigersinn relativ zum Schwenkarm zur Folge hat und dadurch das an der Konsole des Fahrerhauses angreifende Ende des Schwenkhebels das Fahrerhaus im Bereich der vorderen Abfederung und Schwenkachse nach unten zieht, so daß die Abfederung zusammengedrückt wird. Bei weiterer Betätigung des am Schwenkhebel angreifenden Kippzylinders wird über den Schwenkhebel der Schwenkarm und das Fahrerhaus nach vorn in die Kippstellung geschwenkt. Aufgrund der Betätigungskraft des Kippzylinders und der Gewichtskräfte des Fahrerhauses wirkt um die Lagerachse des Schwenkhebels ein im Gegenuhrzeigersinn gerichtetes Moment, wobei die vordere Abfederung zwischen dem Fahrerhaus und dem Fahrzeugrahmen dort wirkende Kräfte jeweils aufzunehmen hat.

Der Erfindung liegt die Aufgabe zugrunde, eine Kippvorrichtung der eingangs genannten Art zu schaffen, die bei einfachem Aufbau bei der Kippbetätigung des Fahrerhauses eine Entlastung der vorderen Abfederung von den Betätigungskräften des Kippzylinders und den Gewichtskräften des Fahrerhauses ermöglicht.

Die Aufgabe ist bei einer Kippvorrichtung der eingangs genannten Art gemäß der Erfindung durch die Merkmale im Kennzeichnungsteil des Anspruchs 1 gelöst.

Dadurch, daß die Konsole des Fahrerhauses bis zum anderen Ende des Schwenkarmes heruntergeführt und mit diesem gelenkig verbunden ist, wobei in diesem Bereich eine unterseitige Abstützung am Fahrzeugrahmen vorhanden ist, ist im vorderen Bereich oberhalb der vorderen Schwenkachse ein relativ großer Abstand für die dortige Abfederung geschaffen, die bei nicht aktiviertem Kippzylinder ungehindert erfolgen kann, wobei das Fahrerhaus mit Konsole an der Anlenkungsstelle des Schwenkarmes relativ zu diesem bei der Ein- und Ausfederung schwenken kann. Dadurch, daß der Schwenkhebel an der Konsole des Fahrerhauses schwenkbar gehalten ist und an seinem von der Lagerachse abstrebenden Arm einen daran angelenkten Stützteil aufweist, der mit seinem anderen Ende am Schwenkarm angelenkt ist, bildet dieser Teil des Schwenkhebels zusammen mit dem Stützteil einen Kniehebelmechanismus, der bei Betätigung des Kippzylinders und anfänglicher Schwenkbetätigung des Schwenkhebels um dessen Lagerachse zunächst gestreckt wird. Dabei verläuft der Stützteil etwa in Verlängerung des zugeordneten Schwenkhebelarmes, wobei der Stützteil an einem Anschlag des Schwenkarmes anschlägt. Bei fortgesetzter Kippbewegung stützt der Stützteil zusammen mit dem Schwenkhebel die Fahrerhauskonsole am Schwenkarm formschlüssig und derart ab, daß bei fortgesetzter Kippbewegung der Kippzylinder allein den Schwenkhebel beaufschlagt und darüber die Konsole, der diese am Schwenkarm abstützende Kniehebelmechanismus und der Schwenkarm als Lagereinheit um die vordere Schwenkachse in Kippstellung schwenkbar sind. Aufgrund der formschlüssigen Abstützung der Fahrerhauskonsole am Schwenkarm, die durch den gestreckten Kniehebelmechanismus bewirkt wird, ist die vorn befindliche Abfederung entlastet und außer Funktion, so daß diese weder die Betätigungskräfte des Kippzylinders noch die Gewichtskräfte oder sonstigen Kräfte aufzunehmen hat, die vom Fahrerhaus her wirken. Von Vorteil ist außerdem, daß bei der Streckung des Kniehebelmechanismus eine zumindest geringfügige Ausfederung der vorderen Abfederung erfolgt und ein genau definierter Federungszustand erreicht wird, der außerhalb des normalen Arbeitsbereiches der vorderen Abfederung liegt. Die Kippvorrichtung ist nicht nur einfach, platzsparend und kostengünstig, sondern sie hat auch den Vorteil, daß sich im Kippzustand ein genau definiertes Verhalten ergibt. Ferner ist es möglich, die vordere Abfederung nun gezielt und allein danach auszulegen, welches Federungsverhalten in Fahrstellung des Fahrerhauses und bei unwirksamer Kippvorrichtung gewünscht wird. In vorteilhafter Weise ist durch die Erfindung die Voraussetzung dafür geschaffen, als vordere Abstützung z. B. mindestens ein Feder-Dämpferbein einzusetzen.

Vorteilhafte Ausgestaltungen der erfindungsgemäßen Kippvorrichtung ergeben sich aus den Ansprüchen 2 - 16.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand eines in den Zeichnungen gezeigten Ausführungsbeispieles näher erläutert. Es zeigen:
- Fig. 1: eine schematische Seitenansicht einer Kippvorrichtung eines Fahrerhauses, und zwar mit durchgezogenen Linien in Fahrstellung und bei unwirksamem Kippantrieb und mit gestrichelten Linien in Kippstellung,
- Fig. 2: eine schematische Seitenansicht entsprechend derjenigen in Fig.1, bei der sich das Kniehebelsystem im gestreckten Zustand und der Stützhebel am Hartanschlag befindet und der eigentliche Kippvorgang beginnt,
- Fig. 3: eine schematische Draufsicht mit Schnitt entlang der Linie III - III in Fig. 1,
- Fig. 4: einen schematischen Schnitt entlang der Linie IV - IV in Fig. 1.

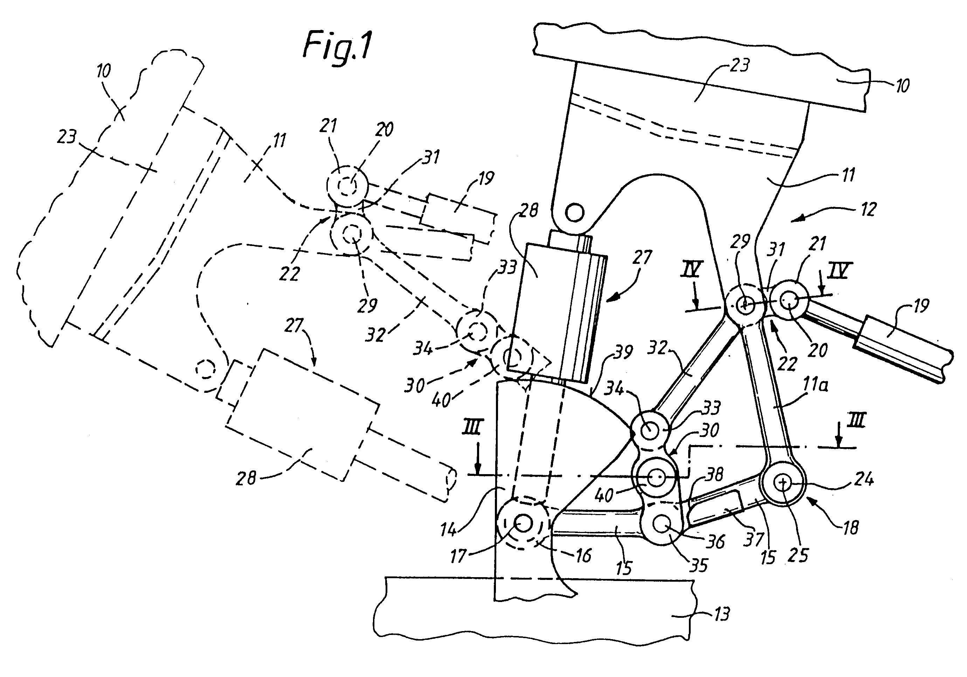

Kippbare Fahrerhäuser, insbesondere für Lastkraftwagen, sind in vielfacher Form bekannt (DE-A 21 61 953, DE-A-23 47 492). Einzelheiten der vorderen Lagerung und sonstigen Details derartiger Fahrerhäuser bedürfen daher hier keiner besonderen Beschreibung. In Fig.1 der Zeichnung ist schematisch nur ein Teil eines Fahrerhauses 10 gezeigt, dem eine Konsole 11 zugeordnet ist. Das Fahrerhaus 10 ist mit einer Kippvorrichtung 12 versehen, deren Elemente auf jeder Längsseite eines Fahrzeugrahmens 13 angeordnet sein können. Einzelheiten des Fahrzeugrahmens 13 sind nicht gezeigt, lediglich ein vorderer Lagerbock 14, der Teil des Fahrzeugrahmens 13 ist.

Die Kippvorrichtung 12 weist auf jeder Längsseite des Fahrzeugrahmens 13 einen als Schwinge wirksamen Schwenkarm 15 auf, der mit einem Ende 16 um eine vorn liegende, quer verlaufende Schwenkachse 17 am Lagerbock 14 schwenkbar gelagert ist. Mit seinem anderen Ende 18 stützt der jeweilige Schwenkarm 15 das Fahrerhaus 10 ab, wie noch später näher erläutert wird. Ferner ist ein Kippzylinder 19 vorgesehen, der nur schematisch angedeutet ist und mit dem nicht weiter sichtbaren Ende am Fahrzeugrahmen 13 abgestützt und schwenkbar gelagert ist. Mit dem sichtbaren Ende 20 greift der Kippzylinder 19 an einem Ende 21 eines schwenkbaren Schwenkhebels 22 an, über den die Betätigungskraft des Kippzylinders 19 auf die Konsole 11 des Fahrerhauses 10 übertragbar ist.

Die Konsole 11 des Fahrerhauses 10 ist vom oberen, in Fig. 1 etwa horizontal verlaufenden Teil 23 schräg heruntergeführt. Ihr Konsolenteil 11a reicht bis zum Ende 18 des Schwenkarmes 15, mit dem das Ende 24 der Konsole 11 gelenkig verbunden ist. Die Gelenkachse ist schematisch mit 25 eingezeichnet.

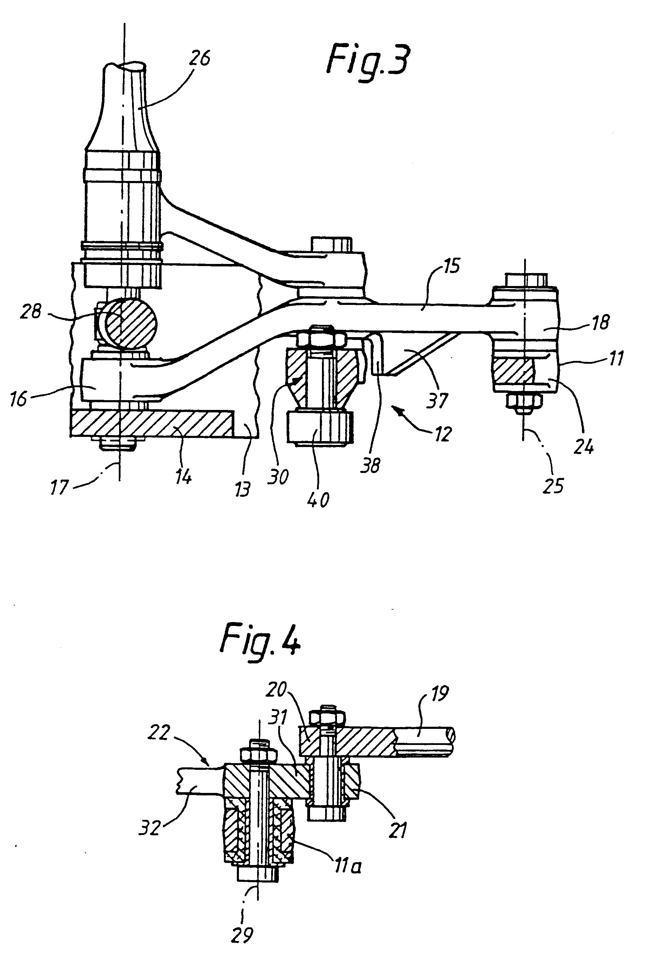

Der Schwenkarm 15 ist mit dem nicht sichtbaren, an der anderen Längsseite des Fahrzeugrahmens 13 vorgesehenen, anderen Schwenkarm mittels eines Stabilisators 26 verbunden, der als Drehstab ausgebildet ist. Der Stabilisator 26 befindet sich im Bereich der vorderen Schwenkachse 17 (Fig. 3).

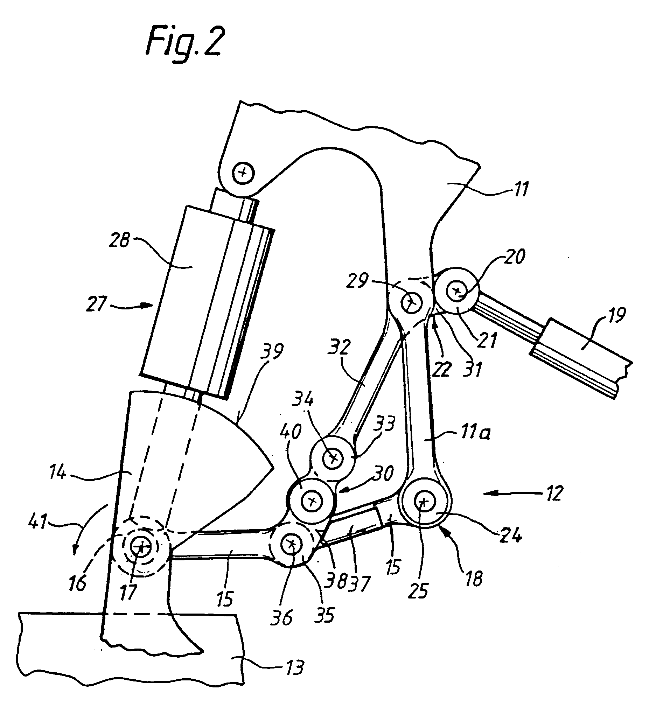

Das Fahrerhaus 10 ist in bezug auf den Fahrzeugrahmen 13 mit einer vorderen Abfederung 27 versehen, die aus einem Feder-Dämpferbein 28 gebildet ist. Das Feder-Dämpferbein 28 erstreckt sich zwischen dem oberen, in Fig. 1 etwa horizontalen Teil 23 der Konsole 11 des Fahrerhauses 10 und dem darunter verlaufenden Schwenkarm 15. Der in Fig. 1 und 2 schräg nach unten gerichtete Abschnitt der Konsole 11, das Feder-Dämpferbein 28 und der Schwenkarm 15 bilden gemeinsam im wesentlichen ein Dreieck, wobei die vordere Schwenkachse 17 etwa im Bereich derjenigen Ecke des Dreiecks verläuft, die vom Schnittpunkt des Schwenkarmes 15 und des Feder-Dämpferbeines 28 gebildet ist. Die andere Ecke des Dreiecks ist durch die Gelenkachse 25 repräsentiert, während die dritte Ecke des Dreiecks etwa durch den Bereich vorgegeben ist, in dem der schräg nach unten gerichtete Teil der Konsole 11 und das Feder-Dämpferbein 28 zusammenlaufen.

Der Schwenkhebel 22 ist in Abstand von seinem Ende 21, an dem das Ende 20 des Kippzylinders 19 angreift, am schräg nach unten gerichteten Teil der Konsole 11 des Fahrerhauses 10 schwenkbar gelagert. Die Lagerachse ist schematisch mit 29 bezeichnet. Der Schwenkhebel 22 ist als doppelarmiger Hebel, und zwar als Winkelhebel, gebildet. Der eine Arm 31 des Schwenkhebels 22 ist mit dem Kippzylinder 19 gekoppelt, während der andere Arm 32, der sich auf der anderen Seite der Lagerachse 29 erstreckt, zum Schwenkarm 15 hinweist. Der Arm 31 ist wesentlich kürzer als der andere Arm 32. Während der eine Arm 31 quer, im wesentlichen etwa rechtwinklig, zum schräg nach unten gerichteten Teil der Konsole 11 des Fahrerhauses 10 ausgerichtet ist, verläuft der andere Arm 32 zum Arm 31 unter einem stumpfen Winkel und dabei so, daß er zumindest im wesentlichen auf die Längenmitte des Schwenkarmes 15 gerichtet ist.

Der Schwenkhebel 22 ist mit dem Schwenkarm 15 über einen Stützteil 30 verbunden, der als Hebel ausgebildet ist. Der Stützteil 30 ist mit einem Ende 33 am zugewandten freien Ende des Armes 32 des Schwenkhebels 22 angelenkt. Die Gelenkachse ist mit 34 bezeichnet. Das andere Ende 35 des Stützteils 30 ist gelenkig mit dem Schwenkarm 15 verbunden. Die Gelenkachse ist mit 36 bezeichnet und befindet sich etwa auf der Längenmitte des Schwenkarmes 15. Bei unwirksamer Kippvorrichtung, d.h. bei in Fig. 1 mit durchgezogenen Linien gezeigter Fahrstellung, bilden der schräg heruntergeführte, armförmige Teil der Konsole 11, der Teil des Schwenkarmes 15, der sich zwischen den Gelenkachsen 25 und 36 erstreckt, ferner der Stützteil 30 und der Arm 32 des Schwenkhebels 22, der sich zwischen den Gelenkachsen 34 und 29 erstreckt, zusammen ein Gelenkviereck. Zu Beginn der Kippbewegung dagegen (Fig. 2) und bei sich anschließender weiterer Kippbewegung bis hin in die Kippstellung, die in Fig. 1 gestrichelt angedeutet ist, erstreckt sich der Stützteil 30 in Verlängerung des Armes 32 des Schwenkhebels 22, wie aus Fig. 2 ersichtlich ist. Der Stützteil 30 besteht aus einem flachen Hebel, der unterhalb des Schwenkhebels 22 verläuft. Er bildet in der in Fig.2 gezeigten Stellung eine Abstützung des beschriebenen,nun auf ein Gelenkdreieck reduzierten Gelenkvierecks.Dazu ist dem Stützteil 30 ein Anschlag 37 des Schwenkarmes 15 zugeordnet. Der Anschlag 37 ist fester Bestandteil des Schwenkarmes 15. Er ist aus einem daran festen Vorsprung gebildet, der vom Schwenkarm 15 auf einer Seite absteht. Wie Fig. 3 erkennen läßt, steht der Anschlag 37 auf der Seite vom Schwenkarm 15 ab, die dem Stützteil 30 zugewandt ist. Dabei steht der Anschlag 37 in die Schwenkbewegungsebene des Stützteiles 30 hinein vor, so daß der Stützteil 30 bei der Schwenkbewegung am Anschlag 37 anschlagen kann. Der Anschlag 37 weist eine zum Verlauf des Schwenkarmes 15 schräg gerichtete Anschlagfläche 38 auf. Diese befindet sich der Seite des Stützteiles 30 benachbart, die der Gelenkachse 25 zwischen dem Schwenkarm 15 und dem schräg heruntergeführten Teil der Konsole 11 zugewandt ist.

Am Fahrzeugrahmen 13, und zwar am rahmenseitigen Lagerbock 14, ist eine zur vorderen Schwenkachse 17 konzentrische, bogenförmige Führungsbahn 39 angeordnet, die sich über einen Umfangswinkel von etwa 60° erstreckt. Der Führungsbahn 39 ist ein am Stützglied 30 angeordnetes Führungsglied 40 in Form einer Rolle zugeordnet, die beim Schwenken der kompletten Einheit um die vordere Schwenkachse 17 in die Kippstellung, die in Fig. 1 gestrichelt gezeigt ist, mit der Führungsbahn 39 in Eingriff gelangt, entlang dieser geführt wird und dabei radial an der Führungsbahn 39 abgestützt ist.

Zum Kippen des Fahrerhauses 10 um die vordere Schwenkachse 17 im Gegenuhrzeigersinn nach vorn wird der Kippzylinder 19 betätigt. Dadurch wird der Schwenkhebel 22, ausgehend von der mit durchgezogenen Linien in Fig. 1 gezeigten Position, um die Lagerachse 29 im Gegenuhrzeigersinn und derart geschwenkt, daß sich dessen Arm 32 dem schräg heruntergeführten Teil der Konsole 11 nähert. Dabei streckt sich der aus dem Arm 32 einerseits und dem Stützteil 30 andererseits gebildete Kniehebel, wobei eine Schwenkbewegung des Stützteiles 30 im Bereich der Gelenkachsen 34 und 36 erfolgt, bis der Stützteil 30 in Verlängerung des Armes 32 verläuft, wie Fig. 2 zeigt. Durch diese Streckbewegung des Kniehebels wird die Konsole 11 um die Gelenkachse 25 zumindest geringfügig im Uhrzeigersinn geschwenkt. Dadurch federt die vordere Lagerung im Bereich des Feder-Dämpferbeines 28 bis zu einem genau definierten Zustand aus, der außerhalb des normalen Arbeitsbereichs des Feder-Dämpferbeines 28 liegt. Dieser Streckzustand des Kniehebelsystems wird dadurch begrenzt und gesichert, daß bei dieser Bewegung der Stützteil 30 mit der Schmalseite, die der Anschlagfläche 38 des festen Anschlages 37 zugewandt ist, an dieser Anschlagfläche 38 formschlüssig zur Anlage kommt und damit am Schwenkarm 15 formschlüssig abgestützt ist. In dieser Stellung ist die Konsole 11 über den Arm 32 und den Stützteil 30 am Schwenkarm 15 formschlüssig abgestützt. Die aus Konsole 11, Arm 32, Stützteil 30 und Schwenkarm 15 bestehende Lagerungseinheit ist somit durch den am Anschlag 37 abgestützten Stützteil 30 versteift. Dadurch liegt ein genau definierter Federungszustand vor, bei dem sich die Gewichtskraft des Fahrerhauses 10 nicht mehr über das Feder-Dämpferbein 28 abstützt; sondern über die Konsole 11, den Arm 32, den Stützteil 30 und den Schwenkarm 15 übertragen wird.

Wird nun der Kippvorgang durch weitere Betätigung des Kippzylinders 19 fortgesetzt, so wird die gesamte Lagereinheit um die vordere Schwenkachse 17 im Lagerbock 14 im Gegenuhrzeigersinn gemäß Pfeil 41 geschwenkt, womit die nicht weiter gezeigte hintere Fahrerhauslagerung entlastet wird und das gesamte Fahrerhausgewicht vorn aufgenommen wird. Der Kippvorgang ist stabil, solange der Schwerpunkt des Fahrerhauses 10 hinter, d.h. bei der Darstellung in Fig. 1 und 2 rechts, der Schwenkachse 17 liegt. In diesem Zustand erzeugt die Gewichtskraft des Fahrerhauses 10 ein Moment, das den Stützteil 30 gegen den Anschlag 37 drückt. Sobald der Schwerpunkt des Fahrerhauses 10 vor, d.h. in Fig. 1 und 2 links, der Schwenkachse 17 liegt, würde die Gewichtskraft des Fahrerhauses 10 ein gegenläufiges Moment zur Folge haben, mit einer auf den Kippzylinder 19 einwirkenden Zugbelastung, die bestrebt wäre, das beschriebene "Gelenkviereck" zu "öffnen", was somit eine Einfederung im Bereich des Feder-Dämpferbeines 28 bewirken würde. Dies wird jedoch durch das Führungsglied 40 in Form der Rolle und die zugeordnete Führungsbahn 39 am Lagerbock 14 verhindert; denn schon vor Erreichen dieses kritischen Zustandes gelangt das Führungsglied 40 bei dieser Schwenkbewegung in den Bereich der Führungsbahn 38. Das Führungsglied 40 in Form der Rolle stützt sich also schon vorher an dieser bogenförmigen Führungsbahn 39 ab. Bei weiterer Kippbewegung folgt das Führungsglied 40 in Form der Rolle der Führungsbahn 39 mit radialer Abstützung an dieser. Dadurch wird diesem Bestreben, das "Gelenkviereck" zu"öffnen", entgegengewirkt.

## Patentansprüche

1. Kippvorrichtung für zumindest vorn mit einer Abfederung versehene Fahrerhäuser (10) von Nutzfahrzeugen, mit zumindest einem Schwenkarm (15), der mit einem Ende (16) am Fahrzeugrahmen (13) um eine vorn liegende, quer verlaufende Schwenkachse (17) schwenkbar gelagert ist und der mit seinem anderen Ende (18) das Fahrerhaus (10) über eine Verbindung abstützt, und mit einem am Fahrzeugrahmen (13) abgestützten Kippzylinder (19), der am einen Ende (21) eines schwenkbaren Schwenkhebels (22) angreift, über den die Betätigungskraft des Kippzylinders (19) auf eine in Abstand von der Abfederung befindliche Konsole (11) des Fahrerhauses (10) übertragbar ist, **dadurch gekennzeichnet**, daß die Konsole (11) des Fahrerhauses (10) bis zum anderen Ende (18) des Schwenkarmes (15), das dem am Fahrzeugrahmen (13) schwenkbar gelagerten Ende (16) gegenüberliegt, heruntergeführt und mit diesem (18) gelenkig verbunden ist und daß der Schwenkhebel (22) in Abstand von der Angriffsstelle (20) des Kippzylinders (19) schwenkbar an der Konsole (11) des Fahrerhauses (10) gelagert ist und mit dem Schwenkarm (15) über einen an letzterem (15) und dem Schwenkhebel (22) angelenkten Stützteil (30) verbunden ist, der bei Betätigung des Kippzylinders (19) und Schwenkung des Schwenkhebels (22) um dessen Lagerachse (29) relativ zur Konsole (11) gegen einen Anschlag (37) des Schwenkarmes (15) schwenkbar ist und der bei fortgesetzter Kippbewegung zusammen mit dem Schwenkhebel (22) die Konsole (11) am Schwenkarm (15) formschlüssig und derart abstützt, daß mittels des den Schwenkhebel (22) beaufschlagenden Kippzylinders (19) der Schwenkhebel (22), der Stützteil (30), die Konsole (11) und der Schwenkarm (15) als Einheit um die vordere Schwenkachse (17) in Kippstellung schwenkbar sind.

2. Kippvorrichtung nach Anspruch 1, **dadurch gekennzeichnet**, daß die Abfederung (27) aus mindestens einem Feder-Dämpferbein (28) gebildet ist, das sich zwischen der Konsole (11) des Fahrerhauses (10) und dem Fahrzeugrahmen (13) und/oder dem Schwenkarm (15) erstreckt.

3. Kippvorrichtung nach Anspruch 1 oder 2, **dadurch gekennzeichnet**, daß die Konsole (11) des Fahrerhauses (10), das Feder-Dämpferbein (28) und der Schwenkarm (15) unter Bildung etwa eines Dreiecks zueinander angeordnet sind, wobei die vordere Schwenkachse (17) etwa im Bereich derjenigen Ecke des Dreiecks verläuft, die vom Schnittpunkt des Schwenkarmes (15) und des Feder-Dämpferbeines (28) gebildet ist.

4. Kippvorrichtung nach einem der Ansprüche 1 - 3, **dadurch gekennzeichnet**, daß der Schwenkhebel (22) als doppelarmiger Hebel ausgebildet ist, dessen einer Arm (31) mit dem Kippzylinder (19) gekoppelt ist und dessen anderer Arm (32) an einem Ende des Stützteils (30) angreift.

5. Kippvorrichtung nach einem der Ansprüche 1 - 4, **dadurch gekennzeichnet**, daß der Schwenkhebel (22) als Winkelhebel ausgebildet ist, dessen einer Arm (31), an dem endseitig der Kippzylinder (19) angreift, sich quer, insbesondere etwa rechtwinklig, zum heruntergeführten Konsolenteil (11a) erstreckt und dessen anderer Arm (32) davon stumpfwinklig und derart abgewinkelt ist, daß er zum Schwenkarm (15) hin weist.

6. Kippvorrichtung nach einem der Ansprüche 1 - 5, **dadurch gekennzeichnet**, daß der heruntergeführte Konsolenteil (11a), der Stützteil (30) und der sich zwischen diesem Konsolenteil (11a) und dem Stützteil (30) erstreckende Schwenkhebelarm (32) sowie der zugeordnete Abschnitt des Schwenkarmes (15) zusammen ein Gelenkviereck bilden.

7. Kippvorrichtung nach einem der Ansprüche 1 - 6, **dadurch gekennzeichnet**, daß der Stützteil (30) in seiner Abstützstellung, in der er am Anschlag (37) des Schwenkarmes (15) anschlägt, sich zumindest im wesentlichen in Verlängerung des Schwenkhebelarmes (32) erstreckt, an dessen Ende der Stützteil (30) angelenkt ist.

8. Kippvorrichtung nach einem der Ansprüche 1 - 7, **dadurch gekennzeichnet**, daß der Schwenkhebelarm (32) und der Stützteil (30) zusammen einen Kniehebelmechanismus bilden.

9. Kippvorrichtung nach einem der Ansprüche 1 - 8, **dadurch gekennzeichnet**, daß der Stützteil (30) etwa im Bereich der Längenmitte am Schwenkarm (15) angelenkt ist.

10. Kippvorrichtung nach einem der Ansprüche 1 - 9, **dadurch gekennzeichnet**, daß der Stützteil (30) als unterhalb des Schwenkhebels (22) verlaufender Hebel ausgebildet ist.

11. Kippvorrichtung nach einem der Ansprüche 1 - 10, **dadurch gekennzeichnet**, daß der Anschlag (37) des Schwenkarmes (15) aus einem daran festen Vorsprung gebildet ist, der vom Schwenkarm (15) in die Schwenkbewegungsebene des Stützteiles (30), insbesondere des Hebels, hinein vorsteht.

12. Kippvorrichtung nach Anspruch 11, **dadurch gekennzeichnet**, daß der Anschlag (37), insbesondere Vorsprung, eine zum Verlauf des Schwenkarmes (15) schräg gerichtete Anschlagfläche (38) aufweist, die sich auf der Seite des Stützteiles (30), insbesondere Hebels, diesem benachbart befindet, die der Gelenkachse (25) zwischen dem Schwenkarm (15) und dem daran angelenkten Konsolenteil (11a) zugewandt ist.

13. Kippvorrichtung nach einem der Ansprüche 1 - 12, **dadurch gekennzeichnet**, daß am Fahrzeugrahmen (13) im Bereich der vorderen Schwenkachse (17) eine bogenförmige, dazu konzentrische Führungsbahn (39) angeordnet ist und daß am Stützteil (30) ein Führungsglied (40), insbesondere eine Rolle, gehalten ist, das beim Schwenken der Einheit um die vordere Schwenkachse (17) in die Kippstellung mit der Führungsbahn (39) in Eingriff gelangt und entlang dieser geführt wird, wobei sich das Führungsglied (40), insbesondere die Rolle, radial an der Führungsbahn (39) abstützen kann.

14. Kippvorrichtung nach Anspruch 13, **dadurch gekennzeichnet**, daß die Führungsbahn (39) an einem rahmenseitigen Lagerbock (14) gebildet ist und sich über einen Umfangswinkel von etwa 60° erstreckt.

15. Kippvorrichtung nach Anspruch 13 oder 14, **dadurch gekennzeichnet**, daß das Führungsglied (40), insbesondere die Rolle, etwa im Bereich der Längenmitte des Stützteiles (30) angeordnet ist.

16. Kippvorrichtung nach einem der Ansprüche 1 - 15, **dadurch gekennzeichnet**, daß an jeder Rahmenlängsseite ein Schwenkarm (15) mit heruntergeführtem Konsolenteil (11a), Schwenkhebel (22) und Stützteil (30), insbesondere Hebel, vorgesehen ist und daß beide Schwenkarme (15) im Bereich der vorderen Schwenkachse (17) mittels eines Stabilisators (26), insbesondere eines Drehstabes, miteinander verbunden sind.

## Claims

1. Tipping device for at least cabs (10) of commercial vehicles which are provided with suspension in front, with at least one swinging arm (15), one of the ends (16) of which is swivel-mounted about a swivel-axis (17) running across the front of the truck frame (13) and the other end (18) of which supports the cab (10) by means of a connection, and with a tipping cylinder (19) supported on the truck frame (13), one end (21) of said tipping cylinder being in contact with a swivel-mounted rocking lever (22) by means of which the operating force of the tipping cylinder (19) can be transmitted to a bracket (11) of the cab (10), separated from the suspension, wherein the bracket (11) of the cab (10) leads downwards as far as the other end (18) of the swinging arm (15), which lies opposite the end (16) which is swivel-mounted on the truck frame (13), and is flexibly connected with this other end (18), and the rocking lever (22) is swivel-mounted on the bracket (11) of the cab (10) at a distance from the point of contact (20) of the tipping cylinder (19), and is connected with the swinging arm (15) by means of a support element (30) which is articulated on the swinging arm (15) and the rocking lever (22), and can swivel against a stop (37) of the swinging arm (15) at the time of operation of the tipping cylinder (19) and rotation of the rocking lever (22) about the axis (29) of its mounting, and which together with the rocking lever (22) form-locks and, in such a manner, supports the bracket (11) on the swinging arm (15), and the rocking lever (22), the support element (30), the bracket (11) and the swinging arm (15) can swivel as a unit when in the tipping position about the front swivel axis (17) by means of the meeting of the tipping cylinder (19) with the rocking lever (22).

2. Tipping device in accordance with claim 1, wherein the suspension (27) is formed at least from a concussion spring leg (28) which extends between the bracket (11) of the cab (10) and the truck frame (13) and/or the swinging arm (15).

3. Tipping device in accordance with claims 1 or 2, wherein the bracket (11) of the cab (10), the concussion spring leg (28) and the swinging arm (15) are set to each other so as to approximately form a triangle, whereby the front swivel-axis (17) runs approximately in the area of the corner formed by the intersection of the swinging arm (15) and the concussion sprint leg (28).

4. Tipping device in accordance with any of claims 1 to 3, wherein the rocking lever (22) is developed as a double-armed lever, one arm (31) of which is coupled with the tipping cylinder (19) and the other arm (32) of which lies against an end of the support element (30).

5. Tipping device in accordance with any of claims 1 to 4, wherein the rocking lever (22) is developed as a double-armed lever, one arm (31) of which lies against the end face of the tipping cylinder (19) and extends across, approximately at right-angles to, the downwardly directed bracket element (11a) and the other arm of which (32) points towards the swinging arm (15) at an obtuse angle to the arm (31).

6. Tipping device in accordance with any of claims 1 to 5, wherein the downwardly directed bracket element (11a), the support element (30) and the rocking lever arm (32) and also the assigned section of the swinging arm (15) together form a swivelling rectangle.

7. Tipping device in accordance with any of claims 1 to 6, wherein the support element (30) in its supporting position, in which it fixes on the stop (37) of the swinging arm (15), at least extends essentially as a extension of the rocking lever arm (32), on the end of which the support element (30) is articulated.

8. Tipping device in accordance with any of claims 1 to 7, wherein the rocking lever arm (32) and the support element (30) together form an elbow lever mechanism.

9. Tipping device in accordance with any of claims 1 to 8, wherein the support element (30) is articulated on the swinging arm (15) approximately in the lengthwise middle area.

10. Tipping device in accordance with any of claims 1 to 9, wherein the support element (30) is developed as a lever running under the rocking lever (22).

11. Tipping device in accordance with any of claims 1 to 10, wherein the stop (37) of the swinging arm (15) is formed from a solid projection on it, which extends from the swinging arm (15) up into the plane of swivel movement of the support element (30), in particular that of the lever.

12. Tipping device in accordance with claim 11, wherein the stop (37), in particular a projection, has an inclined surface of contact (38) in the path of the swinging arm (15), which is located adjacent to the support element (30), in particular a lever, and which is turned towards the pivoting axis (25) between the swinging arm (15) and the bracket element (11a).

13. Tipping device in accordance with any of claims 1 to 12, wherein a curved guideway (39) which is concetric to the swivel axis (17) is disposed in the area of the front swivel axis (17) on the truck frame (13) and a guide element (40), a roller in particular, is held on the support element (30), said guide element being engaged in the guideway (39) when the unit swivels about the front swivel axis (17) in the tipping position and is guided along said guideway, whereby the guide element (40), the roller in particular, can be radially supported on the guideway (39).

14. Tipping device in accordance with claim 13, wherein the guideway (39) is formed on a bearing block (14) on a side of the frame and extends through a segment angle of approximately 60°.

15. Tipping device in accordance with either of claims 13 or 14, wherein the guide element (40), the roller in particular, is disposed approximately in the area of the lengthwise centre of the support element (30).

16. Tipping device in accordance with any of claims 1 to 15, wherein a swinging arm (15) with a downwardly directed bracket element (11a), rocking lever (22) and support element (30), a lever in particular, is provided on each long side of the frame and both swinging arms (15) are connected with each other in the area of the front swivel axis (17) by means of a stabilizing element (26), a torsion bar in particular.

## Revendications

1. Dispositif de basculement pour cabines de conducteurs (10) de véhicules utilitaires munies, au moins à l'avant, d'une suspension, dispositif comportant au moins un bras pivotant (15), qui est monté par une extrémité (16) sur le châssis (13) du véhicule de façon à pouvoir pivoter autour d'un axe de pivotement (17) situé en avant et orienté transversalement et qui soutient par son autre extrémité (18) la cabine de conducteur (10) par l'intermédiaire d'une liaison, ainsi qu'un cylindre de basculement (19) appuyé contre le châssis (13) du véhicule et relié à une extrémité (21) d'un levier pivotant (22) par l'intermédiaire duquel la force d'actionnement du cylindre de basculement (19) peut être transmise à une console (11) de la cabine de conducteur (10) qui est espacée de la suspension, caractérisé en ce que la console (11) de la cabine de conducteur (10) s'étend vers le bas jusqu'à l'autre extrémité (18) du bras pivotant (15), qui est située à l'opposé de l'extrémité (16) montée de façon pivotante sur le châssis (13) du véhicule, et est reliée de façon articulée à ladite autre extrémité (18) et en ce que le levier pivotant (22) est monté, à distance de la zone de liaison (20) du cylindre de basculement (19), de façon pivotante sur la console (11) de la cabine de conducteur (10) et est relié au bras pivotant (15) par l'intermédiaire d'une partie d'appui (30), articulée sur ce dernier (15) et sur le levier pivotant (22) et qui, lors de l'actionnement du cylindre de basculement (19) et lors du pivotement du levier pivotant (22), peut pivoter autour de son axe d'articulation (29) par rapport à la console (11) jusque contre une butée (37) du bras pivotant (15) tandis que, lors de la poursuite du mouvement de basculement, cette partie d'appui (30) assure en coopération avec le levier pivotant (22) et par conjugaison de formes le soutien de la console (11) sur le bras pivotant (15) de telle sorte que, au moyen du cylindre de basculement (19) sollicitant le levier pivotant (22), l'ensemble unitaire formé par le levier pivotant (22), la partie d'appui (30), la console (11) et le bras pivotant (15) puissent pivoter jusque dans la position de basculement autour de l'axe avant de pivotement (17).

2. Dispositif de basculement selon la revendication 1, caractérisé en ce que la suspension (27) est constituée par au moins une jambe élastique d'amortissement (28), qui s'étend entre la console (11) de la cabine de conducteur (10) et le châssis (13) du véhicule et/ou le bras pivotant (15).

3. Dispositif de basculement selon une des revendications 1 ou 2, caractérisé en ce que la console (11) de la cabine de conducteur (10), la jambe élastique d'amortissement (28) et le bras pivotant (15) sont disposés relativement en formant à peu près un triangle, l'axe avant de pivotement (17) passant approximativement dans la zone du sommet du triangle qui est créé par le point d'intersection du bras pivotant (15) et de la jambe élastique d'amortissement (28).

4. Dispositif de basculement selon une des revendications 1 à 3, caractérisé en ce que le levier pivotant (22) est agencé comme un levier à deux bras, dont un bras (31) est accouplé avec le cylindre de basculement (19) et dont l'autre bras (32) est relié à une extrémité de la partie d'appui (30).

5. Dispositif de basculement selon une des revendications 1 à 4, caractérisé en ce que le levier pivotant (22) est agencé comme un levier coudé dont un bras (31), à une extrémité duquel est relié le cylindre de basculement (19), s'étend transversalement, notamment à peu près perpendiculairement, à la partie de console (11a) orientée vers le bas et dont l'autre bras (32) forme un angle obtus et est coudé de telle sorte qu'il soit dirigé vers le bras pivotant (15).

6. Dispositif de basculement selon une des revendications 1 à 5, caractérisé en ce que la partie de console (11a) orientée vers le bas, la partie d'appui (30) et le bras (32) du levier pivotant s'étendant entre cette partie de console (11a) et la partie d'appui (30), ainsi que la zone correspondante du bras pivotant (15) forment ensemble un quadrilatère articulé.

7. Dispositif de basculement selon une des revendications 1 à 6, caractérisé en ce que la partie d'appui (30) s'étend, dans sa zone d'appui par laquelle elle s'applique contre la butée (37) du bras pivotant (15), au moins dans l'essentiel dans le prolongement du bras (32) du levier pivotant à l'extrémité duquel est articulée la partie d'appui (30).

8. Dispositif de basculement selon une des revendications 1 à 7, caractérisé en ce que le bras (32) du levier pivotant et la partie d'appui (30) forment ensemble un mécanisme à genouillère.

9. Dispositif de basculement selon une des revendications 1 à 8, caractérisé en ce que la partie d'appui (30) est articulée à peu près au milieu de sa longueur sur le bras pivotant (15).

10. Dispositif de basculement selon une des revendications 1 à 9, caractérisé en ce que la partie d'appui (30) est agencée sous la forme d'un levier situé en dessous du levier pivotant (22).

11. Dispositif de basculement selon une des revendications 1 à 10, caractérisé en ce que la butée (37) du bras pivotant (15) est formée par un bossage solidaire de ce dernier et qui fait saillie du bras pivotant (15) en pénétrant dans le plan de pivotement de la partie d'appui (30), notamment du levier.

12. Dispositif de basculement selon la revendication 11, caractérisé en ce que la butée (37), notamment un bossage, comporte une surface de butée (38) orientée en oblique par rapport à la direction du bras pivotant (15) et qui est située dans une position adjacente à la partie d'appui (30), notamment de son levier, sur le côté qui est dirigé vers l'axe d'articulation (25) entre le bras pivotant (15) et la partie de console (11a) articulée sur celui-ci.

13. Dispositif de basculement selon une des revendications 1 à 12, caractérisé en ce qu'il est prévu sur le châssis (13) du véhicule dans la zone de l'axe avant de pivotement (17) une voie de guidage (39) concentrique à cet axe et de profil incurvé et en ce que sur la partie d'appui (30) est maintenu un organe de guidage (40), notamment un galet, qui vient s'appliquer, lors du pivotement de l'ensemble autour de l'axe avant de pivotement (17) jusque dans la position de basculement, contre la voie de guidage (39) et qui est guidé le long de celle-ci, cet organe de guidage (40), notamment le galet, pouvant alors s'appuyer radialement contre la voie de guidage (39).

14. Dispositif de basculement selon la revendication 13, caractérisé en ce que la voie de guidage (39) est formée sur un corps de palier (14) situé du côté du châssis et s'étend sur un angle au centre d'environ 60°.

15. Dispositif de basculement selon une des revendications 13 ou 14, caractérisé en ce que l'organe de guidage (40), notamment le galet, est disposé à peu près au milieu de la longueur de la partie d'appui (30).

16. Dispositif de basculement selon une des revendications 1 à 15, caractérisé en ce qu'il est prévu, sur chaque côté longitudinal du châssis, un bras pivotant (15) avec une partie de console (11a) orientée vers le bas, un levier pivotant (22) et une partie d'appui (30), notamment un levier, et en ce que les deux bras pivotants (15) sont reliés entre eux, dans la zone de l'axe avant de pivotement (17), au moyen d'un stabilisateur (26), notamment une barre de torsion.
